# EUROPÄISCHE PATENTSCHRIFT

(11) **EP 1 417 631 B1**
(45) Veröffentlichungstag und Bekanntmachung des Hinweises auf die Patenterteilung: **09.03.2005**
(21) Anmeldenummer: 02767283.1
(22) Anmeldetag: 31.07.2002
(51) Int. Cl.: G06K 7/00

(54) **VERFAHREN ZUR ÜBERTRAGUNG VON DATEN**
METHOD FOR TRANSMITTING DATA
PROCEDE DE TRANSMISSION DE DONNEES

(30) Priorität: 03.08.2001 DE 10138217
(43) Veröffentlichungstag der Anmeldung: 12.05.2004
(73) Patentinhaber: ATMEL Germany GmbH, 74072 Heilbronn (DE)
(72) Erfinder: FRIEDRICH, Ulrich, 74248 Ellhofen (DE)
(86) Internationale Anmeldenummer: PCT/EP2002/008515
(87) Internationale Veröffentlichungsnummer: WO 2003/015333

(56) Entgegenhaltungen:
- EP-A- 0 680 002
- WO-A-01/54339
- US-A- 5 818 348
- BAKHTIYARI S ET AL: "PRACTICAL IMPLEMENTATION OF A MOBILE DATA LINK PROTOCOL WITH A TYPE II HYBRID ARQ SCHEME AND CODE COMBINING" PERSONAL COMMUNICATION - FREEDOM THROUGH WIRELESS TECHNOLOGY. SECAUCUS, NJ., MAY 18 - 20, 1993, PROCEEDINGS OF THE VEHICULAR TECHNOLOGY CONFERENCE, NEW YORK, IEEE, US, Bd. CONF. 43, 18. Mai 1993 (1993-05-18), Seiten 774-777, XP000393297 ISBN: 0-7803-1267-8
- FALAHATI S ET AL: "Hybrid type-II ARQ schemes with adaptive modulation systems for wireless channels" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19. September 1999 (1999-09-19), Seiten 2691-2695, XP010353427 ISBN: 0-7803-5435-4

## Beschreibung

Die vorliegende Erfindung betrifft ein Verfahren zur Übertragung von Daten zwischen einer Basisstation und einem Transponder, gemäß dem Oberbegriff des Patentanspruchs 1.

Ein derartiges Verfahren ist aus der Druckschrift EP 473 569 B1 bekannt. Hierbei werden mittels einer amplitudenmodulierten Trägerwelle digitale Daten zwischen einer Basisstation und einem passiven Transponder ausgetauscht. Die einzelnen Bits eines Datenwortes bestehen aus einer Zeitspanne, in der das elektromagnetische Feld eingeschaltet und einer Zeitspanne, in der das elektromagnetische Feld (Feldlücke) ausgeschaltet ist, wobei die Feldlücke als Separator zwischen zwei aufeinanderfolgenden Bits dient. Die Wertigkeit der Bits bestimmt sich aus der Länge der Zeit, in der das elektromagnetische Feld eingeschaltet ist. Ferner wird bei dem passiven System aus dem Trägerfeld mittels Absorptionsmodulation die Energie für den Transponder erzeugt.

Ein weiteres Verfahren ist in der Druckschrift DE 10050878.2 dargestellt. Durch die Verwendung unterschiedlicher Modulationsindizes für die Amplitudenmodulation der Trägerwelle wird die Datenrate erhöht, indem mehrere Informationssymbole mit einer einzigen Trägerwelle übertragen werden. Hierzu wird die Trägerwelle mittels einer vorgegebenen Zuordnung zwischen den Informationssymbolen und den Modulationsindizes moduliert. Nachteilig ist, daß für die Separation der Informationssymbole eine empfindliche Demodulatorschaltung benötigt wird, welche bei ungünstigen Empfangsverhältnissen die Reichweite der Kommunikation einschränkt.

Im Allgemeinen werden Verfahren zur Übertragung von Daten zwischen einer Basisstation und einem Transponder verwendet, um innerhalb eines sogenannten Authentifizierungsprozesses eine Identifikation durchzuführen. Damit der Anwender keine Verzögerung bemerkt, muß dieser Prozeß innerhalb einer Zeitspanne von etwa 100 ms abgeschlossen sein. Durch die steigenden Sicherheitsanforderungen müssen in immer kürzeren Zeitspannen eine Vielzahl von Informationspaketen auf eine Trägerwelle moduliert werden. Zur Modulation wird neben der Amplitudenmodulation (ASK) vor allem die Phasen (PSK)- und die Frequenzmodulation (FSK) in Verbindung mit einer Pulsweitenmodulation (PWM) eingesetzt. Um eine höhere Datenrate und eine höhere Reichweite zu erzielen, werden im Bereich der Transponder zunehmend Trägerfrequenzen im Bereich von UHF und Mikrowellen eingesetzt, wobei die unterschiedlichen nationalen HF-Vorschriften die Datenrate durch die Frequenzbänder bzw. die Breite der Seitenbänder beeinflußen. Grundlage der bidirektionalen Datenübertragung zwischen Transponder und Basisstation bildet ein Datenprotokoll, das aus einem Kopfabschnitt einen Mittelabschnitt und einem Endabschnitt besteht. In dem Kopfabschnitt werden unter anderem die Anzahl der Informationssymbole und die Anzahl der Wertigkeiten der Datenbits durch eine Kennung für die einzelnen Symbole festgelegt. Mit dieser Kennung werden im Mittelabschnitt die Daten codiert. Eine derartige Zuordnung ist beispielsweise aus ISO-Normvorschlag (WD-Status) 18000-6 vom Juni-2001 bekannt. Um eine zuverlässige Datenübertragung zu erreichen, werden den Symbolen als Kennung Modulationsintervalle mit einer besonders großen Zeitdauer zugeordnet. Hierdurch werden sowohl ungünstige Kommunikationsbedingungen als auch das unterschiedliche An- und Abschwingverhalten der Sende- und Empfangseinheiten des Transponders bzw. der Basisstation berücksichtigt. Ferner wird insbesondere bei Frequenzen im UHF oder Mikrowellenbereich die Zeitdauer der Modulationsintervallen erhöht, um hierdurch die Ungenauigkeit in der Bestimmung der Modulationsintervalle mittels der freischwingenden Oszillatoren bzw. von RC Aufladekurven zu berücksichtigen, d.h. Lesefehler bei der Datenübertragung zu vermeiden.

Eine weitere Möglichkeit zur Übermittlung einer Kennung im Kopfabschnitt einer Datenübertragung ist aus der Druckschrift von S. Bakhtiyari et al., "Practical Implementation of a mobile Data Link Protocol with a Type 11 Hybrid ARQ Scheme and Code Combining", Proceedings of the Vehicular Technology Conference, New York, IEEE, US, Bd. Conf. 43, 18. Mai 1993, Seiten 774 -777, die auch den Oberbegriff des Anspruchs 1 bildet, bekannt. Hierbei wird die Kennung durch einen binär codierten Abschnitt im Kopfbereich definiert.

Nachteil der bisherigen Verfahren ist, daß sich durch die große Zeitdauer der Modulationsintervalle die Datenrate reduziert. Ferner wird die Datenrate reduziert, indem der Modulationshub an das schmalste zulässige Seitenband angepasst wird, um hierdurch die unterschiedliche nationalen HF-Bestimmungen mit einer einzigen Protokolleinstellung zu erfüllen. Dies führt zu konstant geringen Datenraten. Insbesondere bei zeitkritischen Anwendungen macht sich geringen Datenraten störend bemerkbar. Aufgabe der vorliegenden Erfindung ist es, ein Verfahren zur Übertragung von Daten anzugeben, das die Datenrate bei einer drahtlosen Kommunikation erhöht.

Diese Aufgabe wird erfindungsgemäß durch ein Verfahren der eingangs genannten Art mit den Merkmalen des Patentanspruches 1 gelöst. Günstige Ausgestaltungsformen sind Gegenstand von Unteransprüchen.
Hiernach besteht das Wesen der Erfindung darin, bei einer drahtlosen Kommunikation zwischen einer Basisstation und einem Transponder mittels einer variablen Kennung von den Informationssymbolen die Datenrate bzw. die spektrale Verteilung des Frequenzspektrums zu verändern. Hierzu werden bei einer elektromagnetischen Welle, Informationspakete bestehend aus unterschiedlichen Symbolen aufmoduliert. Hierbei weisen die Informationspakete wenigstens einen Kopfabschnitt (Header), einen Mittelabschnitt mit einem Datenbereich und einen Endabschnitt auf, wobei im Kopfabschnitt von wenigstens einem Informationspaket die Anzahl der Symbole angegeben und wenigstens ein Symbol mittels einer veränderbaren Kennung definiert wird. Ferner werden im Mittelabschnitt des gleichen oder eines nachfolgenden Informationspaketes die Daten mittels der veränderbaren Kennung codiert und übertragen. Untersuchungen der Anmelderin haben gezeigt, dass es besonders vorteilhaft ist, wenn die Veränderung der Kennung mittels einer Änderung der zeitlichen Dauer eines anliegenden Modulationszustandes durchgeführt wird.

Ein Vorteil des neuen Verfahrens besteht darin, daß sich wichtige Protokolldaten wie die Anzahl der Symbole und deren Kennung bei der Datenübertragung im Kopfabschnitt einstellen lassen. Durch die Anpassung der Kennung an die unterschiedlichen nationalen Vorschriften läßt sich die Datenrate optimieren bzw. erhöhen. Hierbei lässt sich beispielsweise das Modulationsspektrum der Sendeeinheit durch eine kürzere Zeitdauer des Modulationszustandes an die zulässige HF-Bandbreite anpassen. Für die Modulation der Trägerwelle lassen sich sowohl PSK, ASK als auch FSK Verfahren verwenden.
Beispielsweise lassen sich mit den Transpondem im weltweiten Einsatz Kommunikationsstrecken mit hoher Datenrate entsprechend den nationalen HF-Vorschrifften aufbauen und hierdurch kurze Kommunikationszeiten erzielen. Dies ist besonders vorteilhaft bei einer weltweiten Vernetzung von Produktionsabläufen und insbesondere einem weltweiten Einsatz von Produkten die durch Transponder gekennzeichnet sind. Ein Wechsel von Transponderetiketten oder eine manuelle Anpassung an nationale HF-Vorschriften entfällt. Ferner lässt sich durch eine schnelle automatische Erfassung und Kontrolle der Vertriebswege von Waren eine kostengünstige Steuerung von Warenströmen erzielen.

Ferner läßt sich das Verfahren bei einer Datenübertragung durchführen, das eine veränderliche Zahl von Symbolen benötigt. Beispiel hierfür ist der Wechsel in der Zahl der Wertigkeiten eines Datenbits, bei einer Änderung von der dualen zur hexadezimalen Darstellung, oder falls vom Sender zeitweise ein Symbol zur Synchronisation des Daten- oder des Systemtakts übertragen wird. Diese Art von Synchronisation ist besonders für die Anwendungen im GHz Bereich vorteilhaft, da in diesem Bereich im Allgemeinen aus energetischen Gründen keine Ableitung eines Systems- oder Datentaktes aus der Trägerfrequenz durchgeführt wird. Des Weiteren läßt sich die Datenrate optimieren bzw. erhöhen, indem die Kennung und oder die Anzahl der Symbole an die vorgegebenen Kommunikationsbedingungen angepaßt werden. Bei großer Kommunikationsentfemung und oder bei schlechtem Signal zu Rauschverhältnis ist es dabei vorteilhaft die Anzahl der Symbole zu reduzieren und deren Kennung zu vereinfachen. Ein weiterer Vorteil des Verfahrens ist, daß es sowohl mit einer Frequenz-, einer Phasen- als auch mit einer Amplitudenmodulation durchführbar ist.

In einer Weiterbildung des Verfahrens wird die Anzahl der Symbole und deren Kennung am Beginn einer Datenübertragung von dem Sender definiert. Hierbei wird die Kennung der Symbole im Kopfabschnitt so gewählt, daß sich für die gegebenen Kommunikationsbedingungen eine möglichst hohe Datenrate erzielen läßt. Insbesondere bei stationären Anordnungen von einem Transponder und einer Basisstation reduziert sich der Auswerteaufwand für den Datenbereich, da nur zu Beginn der Datenübertragung der Kopfabschnitt ausgewertet wird.

In einer anderen Weiterbildung des Verfahren werden im Kopfabschnitt eines einem ersten Informationspaket nachfolgenden Informationspaket nur die Symbole übertragen, deren Kennung sich ändert. Hierbei wird die Datenrate durch den Kopfabschnitt nur wenig beeinflusst, da nur die sich ändernden Symbole aufgeführt sind. Ferner wird bei einem kleinen oder fehlenden Kopfabschnitt die Auswertung des Datenbereichs im Empfänger (Transponder oder Basisstation) beschleunigt. Des weiteren lässt sich insbesondere bei Änderung der Wertigkeit bei Datenbits, die eine vielfache Wertigkeit aufweisen, die Anzahl der Symbole sich schnell an die geänderten Bedingungen des Protokolls anpassen, ohne daß im Kopfabschnitt alle Symbole aufgeführt werden.

In einer Weiterbildung des Verfahrens bestimmen die im Kopfabschnitt des jeweiligen Informationspaket angegebenen Symbole und deren Kennung die Codierung der Daten in dem Datenbereich des gleichen Informationspakets. Die Auswertung wird dahingehend vereinfacht, daß der Kopfabschnitt nicht untersucht wird, inwieweit sich im Vergleich zu einem Kopfabschnitt eines vorangegangenem Informationspaketes die Anzahl der Symbole und deren Kennung verändert hat. Hiermit wird eine sofortige Anpassung der Auswertung des Datenbereichs des einzelnen Informationspakets erzielt. In Verbindung mit der Ausführung, daß jedem Datenbereich ein Kopfabschnitt mit einer vollständigen Definition der verwendeten Symbole vorangestellt ist, lässt sich im Empfänger eine Auswertung des Datenbereichs ohne Rückgriff auf eine beispielsweise in einem nichtflüchtigen Speicherbereich abgelegten Datenprotokoll durchführen. Damit reduziert sich Komplexität und der Stromverbrauch der integrierten Schaltung, d.h. bei Anwendung in einem passiven Transponder erhöht sich damit die Kommunikationsreichweite.

In einer Weiterbildung des Verfahrens wird im Kopfabschnitt eines Informationspakets wenigstens der Kennung eines Symbols ein anderer Wert zugeordnet, wie bei der Codierung der Daten mit dieser Kennung im Datenbereich benutzt wird. Damit lassen sich im Kopfabschnitt beispielsweise Grenzwerte für die Kennungen angeben, während im Datenbereich die Daten mit typischen Werten der Kennung auf die Trägerwelle moduliert werden und die Zuverlässigkeit bei der Übertragung erhöhen. Beispielsweise wird für eine ASK, PSK oder FSK modulierten Trägerwelle im Kopfabschnitt die Maximallänge oder die Minimallänge des jeweiligen Modulationsintervalls angegeben. Damit werden im Empfänger für die Auswertung des Datenbereichs typische Werte berechnet.

In einer anderen Weiterbildung wird von dem Sender (Basisstation oder Transponder) im Kopfabschnitt die Anzahl der Symbole und oder deren Kennung solange geändert, bis wenigstens ein Antwortsignal mit einer vorgegebenen Codierung empfangen wird. Durch die Variation der Protokollparameter im Kopfabschnitt läßt sich zwischen Basisstation und Transponder eine Datenübertragung durchführen, wenn im Transponder oder in der Basisstation die Auswertung des Datenbereichs mit einem vorgegebenes Protokoll durchgeführt wird. Ein weiterer Vorteil ist, daß bei den Transpondern und der Basisstation nur die Eckdaten für die Datenübertragung, wie beispielsweise die Art des Modulationsverfahren, zu definieren sind. Um den Abgleichvorgang des Protokolls zwischen Basisstation und Transponder zu beschleunigen, ist es hierbei vorteilhaft, wenn der Empfänger mittels einer vorgegebenen Codierung dem Sender bereits in einem ersten Antwortsignal, die für den Empfänger optimale Ausgestaltung des Protokolls mitteilt. Hiermit läßt sich der Abgleichvorgang beschleunigen und mit wenigen Informationspaketen eine hohe Datenrate einstellen.

In einer anderen Weiterbildung beginnt der Sender den Abgleichvorgang mit einer kleinen oder großen Zahl von Symbolen, die eine große Länge bei den Modulationsintervallen aufweist und verändert die Zahl der Symbole solange bis der Empfänger ein Antwortsignal mit einer vorgegebenen Codierung zurücksendet. Ferner ist es vorteilhaft bei einer vorgegebenen Anzahl von Symbolen, in Abhängigkeit des verwendeten Modulationsverfahrens die Länge eines oder mehrerer Modulationsintervalle beginnend von einen vorgegebenen Wert sukzessive zu verringern. Hierbei beendet der Sender die Reduzierung der Länge der Modulationsintervalle, wenn der Empfänger ein Antwortsignal mit einer vorgegebenen Codierung zurücksendet. Hierzu läßt sich vom Empfänger beispielsweise die Sendeleistung des Antwortsignals unter einen vorgegebenen Wert reduzieren.

Ferner ist es in einer Weiterbildung vorteilhaft, bei sich ändernden Kommunikationsbedingungen eine Einstellung der Datenrate wiederholt durchzuführen, indem beispielsweise der Empfänger ein codiertes Antwortsignal zurücksendet oder die Einstellung bei längerer Zeitdauer nach einer vorgegebenen Zeit wiederholt wird. Ausgangspunkt für die neue Einstellung bilden die zuletzt ermittelten Werte des Protokolls. Um die Kommunikationsbedingungen zu berücksichtigen, wird hierbei von dem Empfänger an den Sender, außer den Informationen über die Anzahl der zu übertragenen Symbole und deren Kennung, weitere Informationen gesendet, wie beispielsweise eine Feldstärkeinformation des im Empfänger ankommenden Signals. Durch eine Auswertung des Antwortsignals läßt sich von dem Sender in einen nachfolgenden Kopfabschnitt die Kommunikationsbedingungen bei der Einstellung der Protokollparameter berücksichtigen.

In einer anderen Weiterbildung des Verfahrens ist es vorteilhaft, wenn nur die Basisstation das Datenprotokoll festlegt und der Transponder das Datenprotokoll übernimmt. Hiermit wird im Transponder die Komplexität der integrierten Schaltung und der Stromverbrauch gering gehalten. Dies ist besonders für passive Transponder wichtig, um deren Energieverbrauch zu reduzieren. Um eine schnelle Anpassung der Protokollparameter zu erzielen, teilt der Transponder vorzugsweise im ersten Antwortsignal seine Protokollbedingungen und oder eine Feldstärkeinformation mit. Nachfolgend wird von der Basisstation das nächste Informationspaket mit den angepaßten Protokollparametern ausgesendet. Untersuchungen der Anmelderin haben gezeigt, daß es vorteilhaft ist, wenn der passive Transponder als Feldstärkeinformation den Wert seiner Versorgungsspannung mitteilt. Femer ist es vorteilhaft, wenn der Transponder der Basisstation den Wert der Versorgungsspannung wiederholt mitteilt, sofern dieser einen vorgegebenen Wert unter- oder überschreitet. Nachfolgend ändert die Basisstation die Kennung der Symbole, d.h. beispielsweise bei einer PWM codierten Trägerwelle die Länge der Modulationsintervalle, so daß der passive Transponder seine Energieabsorption aus dem Feld erhöht oder verringert. Mittels der adaptiven Anpassung der Protokollparameter lassen sich bei passiven Transpondern die Datenrate und die Reichweite der Kommunikation optimieren.

Das erfindungsgemäße Verfahren soll nachfolgend anhand der Ausführungsbeispiele im Zusammenhang mit mehreren schematisierten Zeichnungen erläutert werden. Es zeigen, die
- Fig. 1a: eine Anordnung mit einer Basisstation und einem passiven Transponder, und
- Fig. 1b: der Aufbau eines Datenwortes, und
- Fig. 2a: ein von dem Transponder empfangenes Kopfabschnittsignal für drei Symbolarten, und
- Fig. 2b: die in dem Transponder gebildete zeitliche Ableitung des Signals aus der Figur 2a, und
- Fig. 2c: die in dem Transponder berechnete Breite der Modulationsintervalle des Signals aus der Figur 2b, und
- Fig. 3a: ein von dem Transponder empfangenes Kopfabschnittsignal für eine dreiwertige Bitwertigkeit, und
- Fig. 3b: die zeitliche Ableitung des Signals aus der Figur 3a.

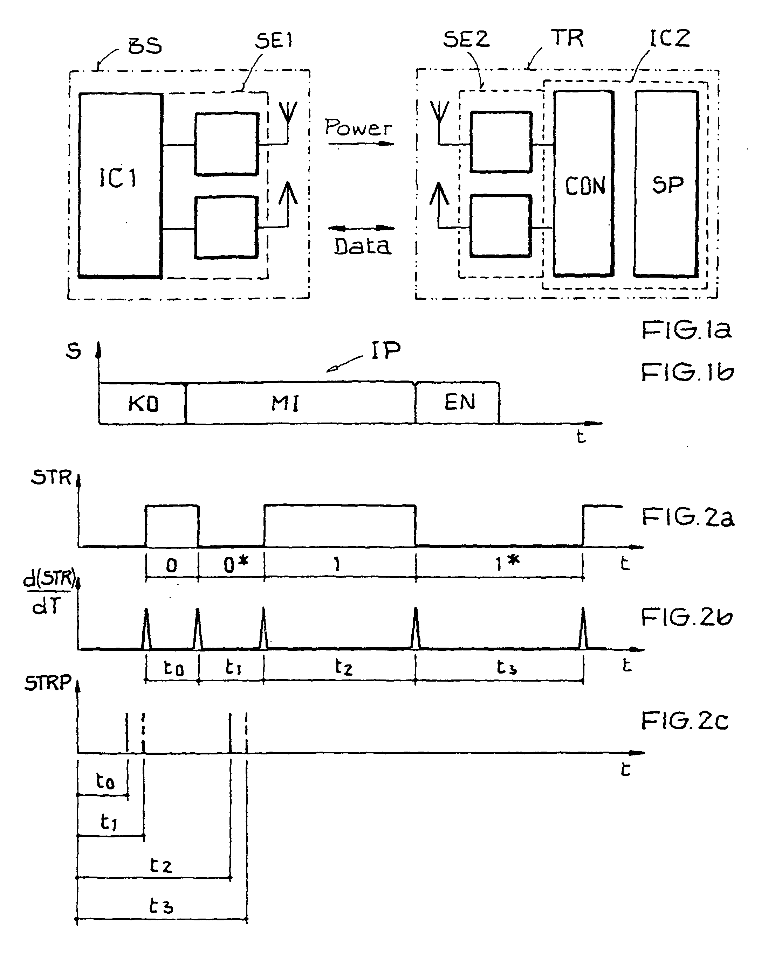

In Figur 1a ist eine Anordnung zur Datenübertragung von einer Basisstation BS und einem passiven Transponder TR abgebildet. Hierbei entnimmt der Transponder TR seine Energie aus der Trägerwelle der Basisstation BS. Derartige Systeme werden unter anderem im Bereich des Kraftfahrzeug (KFZ) eingesetzt, wobei der Transponder im Türschlüssel und die Basisstation BS im Auto eingebaut ist. Die Basisstation BS weist einen integrierten Schaltkreis IC1 auf, der eine Sende- und Empfangseinheit SE1 mit einem Sendeteil RXT1 und einem Empfangsteil SXT1 steuert. Zur Übertragung von Daten sendet die Basisstation eine modulierte Trägerwelle aus, die von dem Transponder TR mittels einer Sende- und Empfangseinheit SE2, der einen Empfangsteil RXT2 und einen Sendeteil SXT2 aufweist, empfangen und zur Auswertung an eine Steuereinheit CON weitergeleitet wird, wobei die Sende- und Empfangsteil SE2 außerdem die zur Versorgung des Transponders TR notwendige Energie absorbiert. Ferner besteht die integrierte Schaltung IC2 aus einer Steuereinheit CON und einer Speichereinheit SP, in der unter anderem die initialen Kenngrößen eines zur Datenübertragung von Informationspaketen verwendeten Protokolls abgelegt sind.

In Figur 1b ist ein schematisiertes Übertragungsprotokoll dargestellt. Hiernach besteht ein Informationspaket IP aus einem Kopfabschnitt KO, einem Mittelabschnitt MI mit einem Datenbereich und einem Endabschnitt EN. In dem Kopfabschnitt KO werden die Anzahl der Symbole und deren Kennung definiert. Des Weiteren lässt sich der Kopfabschnitt KO zur Synchronisation des Datenprotokolls verwenden. Mit der Kennung werden die zu übertragenden Daten im Datenbereich codiert. Im Endabschnitt EN wird über eine vorgegebene Kennung dem Empfänger das Ende des Informationspaketes mitgeteilt. In den weiteren Ausführungen wird das erfindungsgemäße Verfahren mittels einer PWM codierten Trägerwelle erläutert, wobei der Modulationsindex der Trägerwelle zwischen 0% und 100% wechselt, d.h. die Dateninformation bzw. die Wertigkeit der Datenbits ist über die Länge der einzelnen Modulationsintervalle codiert. In dem Transponder TR wird die Länge der Modulationsintervalle bei Frequenzen von 125 kHz aus der gemessenen Zahl der Feldtakte abgeleitet, für Frequenzen im Bereich von GHz mittels der Anzahl der Takte eines im Transponder freischwingenden Oszillators oder von der Ladespannung einer RC-Kombination bestimmt.

Erkennt der Transponder TR eine Datenübertragung, wird zu Beginn der Datenübertragung innerhalb der Steuereinheit CON die Protokollparameter aus dem Kopfabschnitt KO des ersten ankommenden Informationspakets IP extrahiert und beispielsweise mit den in der Speichereinheit SP vorgegebenen Protokollwerten verglichen. Eine weitere Möglichkeit besteht darin, die Protokollparameter mittels einer Plausibilitätsprüfung beispielsweise aus einer vorgegebenen relativen Zeitdifferenz zu ermitteln, d.h. die Speichereinheit SP entfällt. Des Weiteren sendet der Transponder TR der Basisstation BS den Wert seiner Versorgungsspannung. Die Basisstation BS korrigiert Im Kopfabschnitt KO des nachfolgenden Informationspakets IP das Übertragungsprotokoll auf die von dem Transponder TR mitgeteilten Werte, wobei aus der Höhe der Versorgungsspannung des Transponders TR die Länge der Modulationsintervalle für die Codierung der Daten des Datenbereichs berechnet werden. Anschließend quittiert der Transponder TR in einem nachfolgenden Antwortsignal die Protokollwerte.

Ein Vorteil des erfindungsgemäßen Verfahrens besteht darin, daß die Basisstation BS die Datenrate mittels der vom Transponder TR mitgeteilten Protokollwerte in Abhängigkeit der Versorgungsspannung einstellt. Hiermit lässt sich die Datenrate für unterschiedliche Kommunikationsbedingungen einstellen und bei sich ändernden Kommunikationsbedingungen eine hohe Datenrate erzielen. Insbesondere bei ungünstigen Kommunikationsbedingungen wird durch eine Verlängerung der Modulationsintervalle die Zuverlässigkeit der Datenübertragung und die Kommunikationsentfernung erhöht.

In Figur 2a -c ist für den Signalempfang im Transponder TR ein Ausschnitt aus dem Kopfabschnitt eines Informationspakets für eine PWM codierte Trägerwelle dargestellt. Hierbei wird von der Basisstation BS für ein Datenbit das eine zweifache Wertigkeit aufweist für jede Wertigkeit eine Kennung mittels der zeitlichen Länge der Modulationsintervalle definiert.
In der Figur 2a ist das von dem Transponder TR empfangene Signal STR dargestellt. Hierbei ist ein kurzes Modulationsintervall, das der Wertigkeit "Null" zugeordnet ist, und ein langes Modulationsintervall das der Wertigkeit "Eins" zugeordnet ist, durch eine kurze Feldlücke "Null*" separiert. Nachfolgend dem der "Eins" zugeordneten Modulationsintervall ist eine weitere Feldlücke "Eins*" dargestellt. In den Zeiten der Feldlücken ist die Trägerwelle von der Basisstation BS ausgeschaltet.

In der Figur 2b ist die zeitliche Ableitung d(STR)/dt des empfangenen Signals STR dargestellt. Hierbei wird dem Modulationsintervall der "Null" die Zeit t0 zugeordnet, der nachfolgenden Feldlücke "Null" die Zeit t1, dem Modulationsintervall der "Eins" die Zeit t3 und der nachfolgenden Feldlücke "Eins*" die Zeit t4 zugeordnet.

In der Figur 2c sind die in der Figur 2b berechneten Zeiten t0, t1, t2, t3 ihrer Größe entsprechend aufgetragen. Hierbei ist zwischen den Zeiten t0 und t1 bzw. t2 und t3 jeweils eine kurze Zeitdifferenz sichtbar. Die Größe dieser Zeitdifferenz ist proportional dem Unterschied in dem Ab- und Anschwingverhalten des Eingangskreises in der Sende- und Empfangseinheit SE2.

Ein Vorteil des neuen Verfahrens besteht darin, daß mittels des Kopfabschnittes sowohl die typischen zeitlichen Längen für die Modulationsintervalle, als auch die unteren oder oberen Grenzwerte der Längen der Modulationsintervalle übertragen lassen. Ferner lassen sich beispielsweise mit zwei Kennungen im Kopfabschnitt die beiden Symbole für ein zweiwertigen Datenbit und das Symbol des Endabschnitts (Grenzwerte) defnieren. Durch die adaptive Einstellung des Übertragungsprotokolls an die Kommunikationsbedingungen lässt sich ein hohe Datenrate bei unterschiedlichen nationalen HF-Vorschriften ohne Hardwareänderung erzielen.

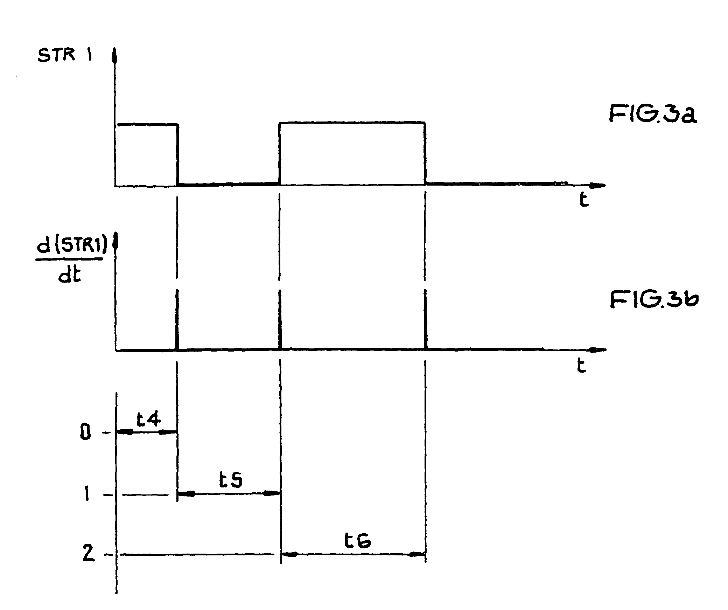

In Figur 3a und der Figur 3b ist für den Signalempfang im Transponder TR ein Ausschnitt aus dem Kopfabschnitt eines Informationspakets für eine PWM codierte Trägerwelle dargestellt. Hierbei wird von der Basisstation BS für ein Datenbit, das eine dreifache Wertigkeit aufweist, für jede Wertigkeit eine Kennung mittels der zeitlichen Länge von Modulationsintervallen definiert. In der Figur 3a ist dasjenige von dem Transponder TR empfangene Signal STR1 dargestellt, welches sich aus der Detektion von den Änderungen des von der Basisstation ausgesendeten elektromagentischen Feldes ableiten lässt. In der Figur 3b ist die zeitliche Ableitung d(STR1)/dt des empfangenen Signals STR1 dargestellt. Hierbei wird einem kurzes Modulationsintervall, das mit der Wertigkeit "Null" verknüpft ist, die Zeit t0 zugeordnet. Ferner wird einem etwas längeres Modulationsintervall, das mit der Wertigkeit "Eins" verknüpfz ist, die Zeit t1 zugeordnet. Des Weiteren wird einem längsten Modulationsintervall, das mit der Wertigkeit "wei" verknüpft ist, die Zeit T2 zugeordnet.

## Patentansprüche

1. Verfahren zur Übertragung von Daten zwischen einer Basisstation (BS) und einem Transponder (TR) mittels einer pulsweitenmodulierten elektromagnetischen Welle, auf die Informationspakete (IP) bestehend aus unterschiedlichen Symbolen aufmoduliert werden, und die Informationspakete (IP) einen Kopfabschnitt (KO), einen Mittelabschnitt (MI) mit einem Datenbereich und einen Endabschnitt (EN) aufweisen, im Kopfabschnitt (KO) von wenigstens einem Informationspaket (IP) die Anzahl der Symbole und deren Kennung angegeben werden und wenigstens ein Symbol mittels einer veränderbaren Kennung definiert wird,
**dadurch gekennteichnet, daß**
• im Kopfabschnitt (KO) die Veränderung der Kennung mittels einer Änderung der zeitlichen Dauer eines anliegenden Modulationszustandes durchgeführt wird,
• im Mittelabschnitt (MI) des gleichen oder eines nachfolgenden Informationspaketes (IP) die Daten mittels der veränderbaren Kennung codiert und übertragen werden.

2. Verfahren nach Anspruch 1, **dadurch gekennzeichnet, daß** zu Beginn der Datenübertragung von der sendenden Einheit ein Übertragungsprotokoll festgelegt wird.

3. Verfahren nach Anspruch 1, **dadurch gekennzeichnet, daß** nach Angabe der Symbole und Definition deren Kennung im Kopfabschnitt (KO) eines nachfolgenden Informationspakets (IP) Symbole mit geänderter Kennung übertragen werden.

4. Verfahren nach einem der Ansprüche 1 bis 3, **dadurch gekennzeichnet, daß** im jeweiligen Informationspaket (IP) die Kennung der Symbole im Datenbereich von der Kennung der Symbole im Kopfabschnitt (KO) bestimmt werden.

5. Verfahren nach einem der Ansprüche 1 bis 4, **dadurch gekennzeichnet, daß** der Kennung wenigstens eines Symbols im Kopfabschnitt (KO) ein erster Wert zugewiesen wird und die Codierung der Daten mit dem Symbol mit einem zweiten Wert durchgeführt wird.

6. Verfahren nach einem der Ansprüche 1 bis 5, **dadurch gekennzeichnet, daß** im Kopfabschnitt (KO) einer modulierten Trägerwelle als Kennung eines Symbols eine minimale oder maximale Länge eines Modulationsintervalls zugewiesen wird.

7. Verfahren nach einem der Ansprüche 1 bis 6, **dadurch gekennzeichnet, daß** die Basisstation (BS) oder der Transponder (TR) für einen Abgleich eines Übertragungsprotokolls die Anzahl der Symbole und/ oder deren Kennung so lange verändert, bis wenigstens ein Antwortsignal mit einer vorgegebenen Codierung empfangen wird.

8. Verfahren nach Anspruch 7, **dadurch gekennzeichnet, daß** von der Basisstation (BS) oder von dem Transponder (TR) beginnend von einer gegebenen Anzahl der Symbole bei jedem nachfolgenden Informationspaket (IP) die Anzahl der Symbole sukzessive erhöht oder reduziert wird.

9. Verfahren nach Anspruch 7, **dadurch gekennzeichnet, daß** von der Basisstation (BS) oder dem Transponder (TR) die Länge der Modulationsintervalle beginnend von einem gegebenen Wert bei jedem nachfolgenden Informationspaket (IP) sukzessive verringert oder erhöht wird.

10. Verfahren nach einem der Ansprüche 7 bis 9, **dadurch gekennzeichnet, daß** von der Basisstation (BS) oder dem Transponder (TR) der Abgleich des Übertragungsprotokolls mehrfach durchgeführt wird.

11. Verfahren nach einem der Ansprüche 7 bis 10, **dadurch gekennzeichnet, daß** mit dem Antwortsignal eine Feldstärkeinformation übertragen wird.

12. Verfahren nach einem der Ansprüche 7 bis 11, **dadurch gekennzeichnet, daß** bei einem passiven Transponder (TR) das Übertragungsprotokoll von der Basisstation (BS) festgelegt wird.

13. Verfahren nach einem der Ansprüche 7 bis 12, **dadurch gekennzeichnet, daß** von dem passiven Transponder (TR) mit dem Antwortsignal der Wert der Versorgungsspannung übertragen wird.

14. Verfahren nach einem der Ansprüche 7 bis 13, **dadurch gekennzeichnet, daß** von der Basisstation (BS) die Kennung der Symbole geändert wird, wenn die Höhe der Versorgungsspannung im passiven Transponder (TR) einen vorgegebenen Wert unter- oder überschreitet.

## Claims

1. Method for transmission of data between a base station (BS) and a transponder (TR) by means of an electromagnetic wave which is modulated in pulse width and onto which data packets (IP) consisting of different symbols are modulated, and the information packets (IP) have a head section (KO), a middle section (MI) with a data region and an end section (EN), the number of symbols and the identification thereof are indicated in the head section (KO) of at least one information packet (IP) and at least one symbol is defined by means of a variable identification, **characterised in that**
- the change in identification is carried out in the head section (KO) by means of a change of the duration in time of a modulation state which is present and
- in the middle section (MI) of the same or a succeeding information packet (IP) the data are coded by means of the variable identification

2. Method according to claim 1, **characterised in that** a transmission protocol is established at the beginning of the data transmission by the transmitting unit.

3. Method according to claim 1, **characterised in that** after statement of the symbols and definition of the identification in the head section (KO) of a succeeding information packet (IP), symbols with changed identification are transmitted.

4. Method according to one of claims 1 to 3, **characterised in that** in the respective information packet (IP) the identifications of the symbols in the data region are determined by the identifications of the symbols in the head section (KO).

5. Method according to one of claims 1 to 4, **characterised in that** a first value is allocated to the identification of at least one symbol in the head section (KO) and the coding of the data is carried out by the symbol with a second value.

6. Method according to one of claims 1 to 5, **characterised in that** in the head section (KO) a minimum or maximum length of a modulation interval is allocated to a modulated carrier wave as identification of a symbol.

7. Method according to one of claims 1 to 6, **characterised in that** the base station (BS) or the transponder (TR) for alignment of a transmission protocol changes the number of symbols and/or the identification thereof until at least one response signal with a predetermined coding is received.

8. Method according to claim 7, **characterised in that**, beginning from a given number of symbols, the number of symbols is successively increased or reduced by the base station (BS) or by the transponder (TR) for each succeeding data packet (IP).

9. Method according to claim 7, **characterised in that**, beginning from a given value, the length of the modulation intervals is successively reduced or increased by the base station (BS) or the transponder (TR) for each succeeding data packet (IP).

10. Method according to one of claims 7 to 9, **characterised in that** the alignment of the transmission protocol is undertaken a plurality of times by the base station (BS) or the transponder (TR).

11. Method according to one of claims 7 to 10, **characterised in that** field strength information is transmitted with the response signal.

12. Method according to one of claims 7 to 11, **characterised in that** in the case of a passive transponder (TR) the transmission protocol is established by the base station (BS).

13. Method according to one of claims 7 to 12, **characterised in that** the value of the supply voltage is transmitted by the passive transponder (TR) together with the response signal.

14. Method according to one of claims 7 to 13, **characterised in that** identification of the symbols is changed by the base station (BS) when the level of the supply voltage in the passive transponder (TR) falls below or exceeds a predetermined value.

## Revendications

1. Procédé de transmission de données entre une station de base (BS) et un transpondeur (TR) au moyen d'une onde électromagnétique à impulsions modulées en largeur, sur laquelle on module des paquets d'informations (IP) consistant en des symboles différents, ces paquets d'information (IP) présentant une partie frontale (KO) une partie médiane (MI) comprenant une zone de données et une partie terminale (EN), le nombre de symboles et leur identification étant indiqués dans la partie frontale (KO) d'au moins un paquet d'informations (IP) et au moins un symbole étant défini au moyen d'une identification modifiable, **caractérisé en ce que**
. l'on réalise la modification de l'identification dans la partie frontale (KO) au moyen d'une modification de la durée d'un état de modulation adjacent,
. les données sont codées au moyen de l'identification modifiable et transmises dans la partie médiane (MI) du même paquet d'informations (IP) ou d'un paquet suivant.

2. Procédé selon la revendication 1, **caractérisé en ce qu'**au début de la transmission de données, un protocole de transmission est défini par l'unité émettrice.

3. Procédé selon la revendication 1, **caractérisé en ce qu'**après indication des symboles et définition de leur identification dans la partie frontale (KO) d'un paquet suivant d'informations (IP) on transmet des symboles à identification modifiée.

4. Procédé selon l'une quelconque des revendications 1 à 3, **caractérisé en ce que** dans chacun des paquets d'informations (IP) l'identification des symboles dans la zone de données est déterminée par l'identification des symboles dans la partie frontale (KO).

5. Procédé selon l'une quelconque des revendications 1 à 4, **caractérisé en ce qu'**une première valeur est attribuée à l'identification d'au moins un symbole dans la partie frontale (KO) et **en ce que** le codage des données par le symbole est effectué avec une deuxième valeur.

6. Procédé selon l'une quelconque des revendications 1 à 5, **caractérisé en ce que** l'on attribue comme identification d'un symbole à une onde porteuse modulée dans la partie frontale (KO) une longueur minimale ou maximale d'un intervalle de modulation.

7. Procédé selon l'une quelconque des revendications 1 à 6, **caractérisé en ce que** pour un réglage d'un protocole de transmission, la station de base (BS) ou le transpondeur (TR) modifie le nombre de symboles et/ou leur identification jusqu'à ce que l'on reçoive au moins un signal de réponse à codage prédéfini.

8. Procédé selon la revendication 7, **caractérisé en ce qu'**à partir d'un nombre donné de symboles, le nombre de symboles est successivement augmenté ou réduit pour chaque paquet d'informations (IP) consécutif par la station de base (BS) ou le transpondeur (TR).

9. Procédé selon la revendication 7, **caractérisé en ce qu'**à partir d'une valeur donnée, la longueur des intervalles de modulation est successivement diminuée ou augmentée pour chaque paquet d'informations (IP) consécutif par la station de base (BS) ou le transpondeur (TR).

10. Procédé selon l'une quelconque des revendications 7 à 9, **caractérisé en ce que** l'établissement du protocole de transmission est réalisé à plusieurs reprises par la station de base (BS) ou le transpondeur (TR).

11. Procédé selon l'une quelconque des revendications 7 à 10, **caractérisé en ce qu'**une information relative à l'intensité du champ est transmise avec le signal de réponse.

12. Procédé selon l'une quelconque des revendications 7 à 11, **caractérisé en ce que** dans le cas d'un transpondeur (TR) passif, le protocole de transmission est défini par la station de base (BS).

13. Procédé selon l'une quelconque des revendications 7 à 12, **caractérisé en ce que** la valeur de la tension d'alimentation est transmise avec le signal de réponse par le transpondeur (TR) passif.

14. Procédé selon l'une quelconque des revendications 7 à 13, **caractérisé en ce que** l'identification des symboles est modifiée par la station de base (BS) lorsque l'amplitude de la tension d'alimentation dans le transpondeur (TR) passif descend en-dessous de ou dépasse une valeur prédéfinie.
